# EUROPÄISCHE PATENTSCHRIFT

(11) **EP 2 893 203 B1**
(45) Veröffentlichungstag und Bekanntmachung des Hinweises auf die Patenterteilung: **19.07.2017**
(21) Anmeldenummer: 13776944.4
(22) Anmeldetag: 23.08.2013
(51) Int. Cl.: F16B 25/00, F16B 25/10

(54) **LOCH- UND GEWINDEFORMENDE SCHRAUBE ZUM DIREKTVERSCHRAUBEN VON BAUTEILEN OHNE VORLOCHEN, SOWIE HIERMIT HERGESTELLTER BAUTEILVERBUND**
SELF-DRILLING AND TAPPING SCREW FOR DIRECTLY SCREWING TOGETHER COMPONENTS WITHOUT PILOT HOLES AND COMPONENT ASSEMBLY MADE IN THIS WAY
VIS FORMANT UN TROU ET UN TARAUDAGE POUR LE VISSAGE DIRECT DE PIÈCES SANS PRÉ-PERCER AINSI QU'ASSEMBLAGE DE PIÈCES AINSI RÉALISÉ

(30) Priorität: 07.09.2012 DE 102012215901
(43) Veröffentlichungstag der Anmeldung: 15.07.2015
(73) Patentinhaber: Bayerische Motoren Werke Aktiengesellschaft, 80809 München (DE); Arnold Umformtechnik GmbH & Co. KG, 74670 Forchtenberg-Ernsbach (DE)
(72) Erfinder: VOGEL, Georg, 74653 Ingelfingen (DE); FRÖHLICH, Dominik, 74639 Zweiflingen (DE); WILHELM, Maximilian Felix, 85461 Bockhorn (DE); FORSTER, Andreas, 92526 Oberviechtach (DE); KAISER, Manuel, 71277 Rutesheim (DE); SOMNITZ, Andreas, 75392 Deckenfronn (DE)
(74) Vertreter: Patentanwälte Bals & Vogel
(86) Internationale Anmeldenummer: PCT/DE2013/000489
(87) Internationale Veröffentlichungsnummer: WO 2014/036986

(56) Entgegenhaltungen:
- DE-C1- 4 440 437
- DE-U1- 9 211 354
- FR-A1- 2 560 304

## Beschreibung

Die Erfindung betrifft eine loch- und gewindeformende Schraube zum Direktverschrauben von Bauteilen, mit einem Kopf und einem vom Kopf wegweisenden Schaft, wobei der Schaft einen selbstformenden Gewindeabschnitt und einen davor angeordneten Lochformungsabschnitt zum Fließlochformen aufweist.

Die Erfindung betrifft ferner einen mit wenigstens einer solchen loch- und gewindeformenden Schraube gefügten Bauteilverbund mit wenigstens zwei Bauteilen.

Eine loch- und gewindeformende Schraube der betreffenden Art dient dem mechanischen Fügen bzw. Verbinden von wenigstens zwei Bauteilen durch Herbeiführen einer Schraubverbindung. Bei diesen Bauteilen handelt es sich insbesondere um Baukomponenten für eine Kraftfahrzeugkarosserie, wie bspw. Metallbleche und Metallprofile (die als Halbzeuge oder als räumlich geformte Bauteile vorliegen können), Gussteile und dergleichen.

Unter Direktverschrauben wird das Herbeiführen einer Schraubverbindung zwischen den zu fügenden Bauteilen ohne ein vorausgehendes separates Einbringen von Löchern bzw. Bohrungen (so genannte Vorlöcher) in diese Bauteile verstanden. Beim Direktverschrauben entfällt sowohl der Aufwand für das Einbringen der Vorlöcher als auch der Aufwand für die Lochfindung beim Ausrichten der zu fügenden Bauteile.

Eine loch- und gewindeformende Schraube der betreffenden Art ist aus der DE 39 09 725 C1 bekannt. In der DE 39 09 725 C1 ist auch das so genannte Fließlochformen (Fließlochverfahren) beschrieben. Beim fließlochformenden Schrauben bzw. Verschrauben wird die speziell hierfür ausgebildete loch- und gewindeformende Schraube mit ihrem Lochformungsabschnitt an der Verbindungsstelle gegen die zu fügenden, zueinander ausgerichteten und nicht vorgelochten Bauteile gedrückt und in Drehung versetzt. Infolge der entstehenden Reibung wird die Verbindungsstelle lokal erwärmt, was eine Plastifizierung der Bauteilmaterialien ermöglicht, die hieraufhin in radialer Richtung und in axialer Richtung mit dem Lochformungsabschnitt plastisch verformt und schließlich durchdrungen werden. D. h. der Lochformungsabschnitt einer betreffenden loch- und gewindeformenden Schraube hat hinsichtlich der Bauteilmaterialien eine Plastifizierungsfunktion bzw. Plastifizierungswirkung. Beim Durchdringen mittels des Lochformungsabschnitts wird zumindest an einem der zu fügenden Bauteile auch ein so genannter Durchzug (auch als Fließloch bezeichnet) ausgeformt, in den nachfolgend der selbstformende Gewindeabschnitt der loch- und gewindeformenden Schraube eingreift und eine kraft- und formschlüssige Verbindung zwischen den Bauteilen herbeiführt.

Zum Stand der Technik und zum Verständnis der Erfindung wird ergänzend auch auf die aktuelle DE 10 2010 050 979 A1 hingewiesen.

Das zuvor beschriebene fließlochformende Direktverschrauben setzt eine plastische Verformbarkeit der Bauteilmaterialien voraus. Bislang werden daher nur metallische Bauteile (vorwiegend Aluminiummaterialien) auf die zuvor beschriebene Weise gefügt. Im Zuge des modernen Mischbaus bei Kraftfahrzeugkarosserien (wobei die Erfindung ausdrücklich nicht hierauf beschränkt ist) werden auch nicht plastisch verformbare Materialien, wie bspw. faserverstärkte Kunststoffe (FVK) und insbesondere kohlenstofffaserverstärkte Kunststoffe (CFK), verbaut, die ohne ein Vorlochen in der oben beschriebenen Weise, d. h. mit einer loch- und gewindeformenden Schraube gemäß dem Stand der Technik, nicht durchdrungen werden können ohne hierbei stark geschädigt zu werden.

Der Erfindung liegt die Aufgabe zugrunde eine loch- und gewindeformende Schraube der eingangs genannten Art anzugeben, mit der grundsätzlich auch Bauteile aus einem nicht plastisch verformbaren Material ohne Vorlochen direkt verschraubt und auf diese Weise dauerhaft gefügt werden können.

Diese Aufgabe wird gelöst durch eine erfindungsgemäße loch- und gewindeformende Schraube mit den Merkmalen des Anspruchs 1. Mit dem nebengeordneten Anspruch erstreckt sich die Lösung der Aufgabe auch auf einen Bauteilverbund. Bevorzugte Weiterbildungen und Ausgestaltungen ergeben sich analog für beide Erfindungsgegenstände sowohl aus den abhängigen Ansprüchen als auch aus den nachfolgenden Erläuterungen.

Die erfindungsgemäße loch- und gewindeformende Schraube zum Direktverschrauben von wenigstens zwei Bauteilen weist einen Kopf (bzw. Schraubenkopf) und einen am Kopf angeformten Schaft (bzw. Gewindeschaft, Bolzen oder Gewindebolzen) auf, der vom Kopf wegweist bzw. sich vom Kopf wegerstreckt, wobei der Schaft einen selbstformenden Gewindeabschnitt und einen davor angeordneten bzw. befindlichen Lochformungsabschnitt (mit Plastifizierungsfunktion) zum Fließlochformen und eine abgerundete oder abgeflachte Schraubenspitze aufweist. Erfindungsgemäß ist vorgesehen, dass der Schaft wenigstens eine Schneidkante mit Zerspanungsfunktion aufweist, die im Wesentlichen vor dem selbstformenden Gewindeabschnitt am Lochformungsabschnitt angeordnet ist und die sich nicht bis zur Schraubenspitze erstreckt, sodass die Schraubenspitze schneidkantenfrei ist, wobei diese Schneidkante ferner derart ausgebildet ist, dass diese beim Drehen der Schraube in eine Drehrichtung (A) das Schneiden eines Durchgangslochs ermöglicht und beim Drehen der Schraube in die entgegengesetzte Drehrichtung (B) das Fließlochformen zulässt, wodurch die Schneidkante einerseits das Einbringen und insbesondere das Schneiden bzw. Einschneiden eines Durchgangslochs (ohne Durchzug) in wenigstens eines der zu verschraubenden Bauteile ermöglicht, ohne jedoch andererseits das Fließlochformen (mit Durchzug) in wenigstens einem anderen der zu verschraubenden Bauteile zu beeinträchtigen.

Es ist vorgesehen, dass sich die Schneidkante nicht bis zur Schraubenspitze erstreckt und die Schraubenspitze somit schneidkantenfrei ist. Der axiale Abstand von der Schraubenspitze bis zur Schneidkante (d. h. bis zu dem der Schraubenspitze zugewandten Anfangspunkt der Schneidkante) beträgt bevorzugt weniger als der maximale Schaftdurchmesser (bzw. Durchmesser des Schafts) der erfindungsgemäßen Schraube. Die Schraubenspitze, die insbesondere für das lokale Erwärmen der Verbindungsstelle vorgesehen ist, wird somit in ihrer Funktion nicht durch die Schneidkante beeinträchtigt. Es kann jedoch auch vorgesehen sein, dass sich die Schneidkante bis zur Schraubenspitze erstreckt.

Die bezüglich des Schafts gebrauchten Positionsangaben "davor", "vor", "danach" und dergleichen beziehen sich auf eine axiale Betrachtungsrichtung ausgehend von der vom Kopf abgewandten Schraubenspitze in Richtung des Kopfs.

Ein Durchgangsloch zeichnet sich im Wesentlichen dadurch aus, dass dieses keinen hülsenartigen Durchzug wie bei einem Fließloch aufweist und insbesondere im Wesentlichen auch kraterfrei ausgebildet ist.

Die erfindungsgemäße Schraube ist am Schaft mit wenigstens einer Schneidkante ausgebildet, die einerseits beim Drehen der Schraube das Einbringen und insbesondere das Schneiden bzw. Einschneiden eines Durchgangslochs (das im Gegensatz zu einem Fließloch im Wesentlichen keinen Durchzug aufweist) in wenigstens eines der Bauteile ermöglicht und die andererseits das Fließlochformen (mit Durchzug) zulässt bzw. ein solches Fließlochformen in wenigstens einem anderen Bauteil im Wesentlichen nicht verhindert oder beeinträchtigt. Die wenigstens eine Schneidkante, oder ein hierzu in seiner Funktion vergleichbares Element, ist damit also auch zum Fließlochformen geeignet. Unter "geeignet" wird verstanden, dass die Schneidkante derart ausgebildet ist, dass diese das Fließlochformen ermöglicht bzw. zulässt oder zumindest ein Fließlochformen nicht verhindert.

Die vorgesehene Schneidkante ist derart ausgebildet, dass diese eine Zerspanungsfunktion aufweist, so dass mit dieser Schneidkante bezüglich des Bauteilmaterials eines zu durchlochenden Bauteils zumindest teilweise auch eine Zerspanungswirkung erzielt werden kann. Die Schneidkante kann insofern auch als Fräskante bezeichnet werden. Die Zerspanungsfunktion wird vorzugsweise durch eine scharfkantige Ausbildung der Schneidkante erzielt. Die Schneidkante kann ergänzend zu ihrer Zerspanungsfunktion auch eine Verformungs- und insbesondere Plastifizierungsfunktion (bzw. Plastifizierungswirkung) haben, derart, dass das sich beim Drehen der Schraube (insbesondere in einer durch die bauliche Ausgestaltung der Schraube vorgegebenen Richtung) vor der Schneidkante aufstauende Bauteilmaterial in Folge des wirkenden Drucks verformt wird und so das Einbringen eines Durchgangslochs und/oder die Ausbildung eines Fließlochs mit Durchzug begünstigt. Die Schneidkante am Schaft der erfindungsgemäßen Schraube ermöglicht somit das Einbringen bzw. Erzeugen eines im Wesentlichen durchzugsfreien Durchgangslochs in wenigstens eines der zu fügenden bzw. zu verschraubenden Bauteile, durch ein Zerspannen (hierzu soll insbesondere auch ein sukzessives Schaben bzw. Abschaben des Bauteilmaterials gehören) und ein gegebenenfalls ergänzendes plastisches Verformen des Bauteilmaterials und/oder auch Reißen oder Zerreißen des Bauteilmaterials.

Aus der DE 10 2006 034 584 A1 ist eine loch- und gewindeformende Schraube bekannt, die an ihrem Lochformungsabschnitt mit Rippen ausgebildet ist. Im Gegensatz zu einer Schneidkante an einer erfindungsgemäßen loch- und gewindeformenden Schraube hat eine Rippe an der vorbekannten loch- und gewindeformenden Schraube keinerlei Zerspanungsfunktion. Die aus der DE 10 2006 034 584 A1 vorbekannte loch- und gewindeformende Schraube ist daher vollkommen ungeeignet für das beschädigungsfreie Direktverschrauben von Bauteilen die aus nicht plastisch verformbaren Materialien gebildet sind.

Die wenigstens eine Schneidkante ist bezüglich der Erstreckungsrichtung des Schafts bzw. bezüglich der Einschraubrichtung im Wesentlichen vor dem selbstformenden Gewindeabschnitt angeordnet und weist insbesondere eine axiale Erstreckung auf. Ausgehend von der Schraubenspitze (am freien Ende des Schafts) endet die Schneidkante somit im Wesentlichen vor dem selbstformenden Gewindeabschnitt. "Im Wesentlichen" heißt hierbei, dass sich die Schneidkante unter Umständen bis in den selbstformenden Gewindeabschnitt hinein erstrecken kann. Die wenigstens eine Schneidkante kann verschiedenartig ausgebildet sein, was teilweise Gegenstand bevorzugter und nachfolgend noch näher erläuterter Weiterbildungen und Ausgestaltungen ist. Bevorzugt sind mehrere identisch oder auch unterschiedlich ausgebildete Schneidkanten an einer erfindungsgemäßen loch- und gewindeformenden Schraube vorgesehen. In den vorausgehenden und nachfolgenden Erläuterungen wird teilweise und nicht einschränkend von nur einer Schneidkante ausgegangen.

Einerseits ermöglicht die vorgeschlagene Schneidkante das Einbringen (bzw. Erzeugen oder Ausbilden) eines Durchgangslochs (bzw. einer Bohrung) in wenigstens einem der zu fügenden Bauteile. Insbesondere handelt es sich hierbei um das obere bzw. oberste Bauteil, das eine Einschraubseite bzw. Eintrittseite aufweist und das dem Kopf der Schraube zugewandt ist. Innerhalb eines mehr als zwei Bauteile umfassenden Bauteilverbunds kann auch in mehrere, insbesondere benachbarte, Bauteile ein Durchgangsloch eingebracht werden.

Andererseits verhindert die Schneidkante nicht das Fließlochformen in wenigstens einem anderen der zu fügenden Bauteile. Insbesondere handelt es sich hierbei um das untere bzw. unterste Bauteil, das eine Austrittseite aufweisen kann und das vom Kopf der Schraube abgewandt ist. Ebenso kann es sich aber auch um ein Zwischenbauteil innerhalb eines mehr als zwei Bauteile umfassenden Bauteilverbunds handeln. Es kann vorgesehen sein, dass sich das einzubringende bzw. eingebrachte Fließloch innerhalb eines mehr als zwei Bauteile umfassenden Bauteilverbunds über mehrere Bauteile erstreckt bzw. mehrere Bauteile einschließt.

Mit einer erfindungsgemäßen Schraube kann demnach durch Drehen um die Längsachse (unter gleichzeitigem Aufbringen einer axial wirkenden Druckkraft) zunächst in das obere Bauteil oder die oberen Bauteile ein Durchgangsloch eingebracht werden und durch anschließendes Weiterdrehen (unter gleichzeitigem Aufbringen einer axial wirkenden Druckkraft) in die selbe oder gegebenenfalls auch in die andere bzw. entgegengesetzte Drehrichtung (wie nachfolgend noch näher erläutert) ein Fließloch im unteren Bauteil oder den unteren Bauteilen ausgeformt werden, in das anschließend der selbstformende Gewindeabschnitt der Schraube kraft- und formschlüssig eingreifen kann, wie obenstehend erläutert.

Ein zu durchlochendes Bauteil, wobei es sich insbesondere um das obere Bauteil handelt (wie vorausgehend erläutert), kann insbesondere aus einem plastisch nicht oder nur schwer verformbaren Material bzw. aus einem spröden Material gebildet sein. Bevorzugt ist dieses Bauteil aus einem nicht-metallischen Werkstoff gebildet. Besonders bevorzugt ist dieses Bauteil aus einem faserverstärkten Kunststoff (FVK) und insbesondere aus einem kohlenstofffaserverstärkten Kunststoff (CFK) gebildet. Dieses Bauteil kann aber ebenso auch aus einem plastisch verformbaren bzw. duktilen Material, wie bspw. einem Metallmaterial und insbesondere einem Aluminiummaterial oder einem Stahlmaterial, gebildet sein. Mit der erfindungsgemäßen Schraube können damit sowohl in spröden als auch in duktilen Bauteilmaterialien Durchgangslöcher erzeugt werden.

Das zum Fließlochformen vorgesehene Bauteil, wobei es sich insbesondere um das untere Bauteil handelt (wie vorausgehend erläutert), kann aus einem plastisch verformbaren Material, wie bspw. einem Metallmaterial und insbesondere einem Aluminiummaterial oder einem Stahlmaterial, gebildet sein. Dieses Bauteil kann aber ebenso auch aus einem nicht-metallischen Material, wie bspw. einem Kunststoffmaterial gebildet sein. Prinzipiell könnte dieses Bauteil auch aus einem plastisch nicht oder nur schwer verformbaren Material bzw. einem spröden Material gebildet sein, wie bspw. einem faserverstärkten Kunststoff (FVK) und insbesondere einem kohlenstofffaserverstärkten Kunststoff (CFK).

Mit der erfindungsgemäßen loch- und gewindeformenden Schraube können somit Bauteile aus einem nicht plastisch verformbaren bzw. spröden Material mit Bauteilen aus einem plastisch verformbaren bzw. duktilen Material beschädigungsfrei ohne Vorlochen mechanisch gefügt werden, wie nachfolgend noch näher erläutert, wobei die erfindungsgemäße Schraube auch für andere Materialkombinationen verwendet werden kann. Gegenüber den aus dem Stand der Technik bekannten Möglichkeiten zum Fügen derart unterschiedlicher Bauteile ergeben sich deutliche Zeitvorteile (Verkürzung der Prozesszeit) und Kostenvorteile. Zudem besteht eine hohe Prozesssicherheit. Ferner ist eine einseitige Zugänglichkeit an der Fügestelle ausreichend. Ein weiterer Vorteil ist auch darin zu sehen, dass eine mit einer erfindungsgemäßen Schraube herbeigeführte Schraubverbindung sehr reparaturfreundlich ist. Dies ist keine abschließende Aufzählung von Vorteilen, die sich aus und mit der Erfindung ergeben.

Besonders bevorzugt ist vorgesehen, dass die Schneidkante derart ausgebildet ist, dass diese beim Drehen der Schraube in eine Drehrichtung das Einbringen und insbesondere das Schneiden eines Durchgangslochs ermöglicht und beim Drehen der Schraube in die andere bzw. entgegengesetzte Drehrichtung das Fließlochformen zulässt. In anderen Worten heißt dies, dass die Schneidkante vorzugsweise so angeordnet und derart ausgebildet ist, dass diese beim Drehen der Schraube in eine Richtung bzw. Drehrichtung (Schneid-Drehrichtung) das Schneiden eines Durchgangslochs ermöglicht und beim Drehen der Schraube in die andere bzw. entgegengesetzte Drehrichtung (Fließlochform-Drehrichtung) auch zum Fließlochformen geeignet ist, so dass beim Drehen der Schraube in eine Drehrichtung das Schneiden eines Durchgangslochs und beim Drehen der Schraube in die andere Drehrichtung ein Fließlochformen möglich ist bzw. ermöglicht wird.

Die Schneidkante kann sich parallel zur Längsachse der erfindungsgemäßen Schraube erstrecken. Es kann jedoch auch eine zur Längsachse schräge und insbesondere wendelförmige Ausbildung vorgesehen sein. Ferner können mehrere Schneidkanten vorgesehen sein, die am Schaftumfang gleichmäßig und insbesondere symmetrisch oder ungleichmäßig und insbesondere unsymmetrisch verteilt angeordnet sein können. Die Schneidkanten können identisch oder verschiedenartig ausgebildet sein.

Die erfindungsgemäße loch- und gewindeformende Schraube kann einstückig aus einem massiven Metallmaterial, wie insbesondere einem Stahlmaterial, hergestellt sein. Bevorzugt handelt es sich um eine umformtechnische hergestellte Schraube. Der selbstformende Gewindeabschnitt am Schaft der erfindungsgemäßen Schraube kann bspw. durch Gewindewalzen erzeugt sein.

Der Schaft der erfindungsgemäßen Schraube weist eine axiale Längserstreckung auf. Entlang seiner axialen Längserstreckung ist der Schaft typischerweise mit einem veränderlichen Querschnitt ausgebildet. Der veränderliche Querschnitt kann im Wesentlichen kreisrund ausgebildet sein. Der veränderliche Querschnitt kann aber auch im Wesentlichen trilobular (Dreieck-Rund) ausgebildet sein. Ferner ist denkbar, dass der Schaft entlang seiner axialen Längserstreckung eine veränderliche Querschnittsform aufweist. Insbesondere kann der Lochformungsabschnitt mit Abflachungen und schärferen Abrundungen ausgebildet sein, wie in der DE 39 09 725 C1 beschrieben (siehe dort Fig. 2).

Der selbstformende Gewindeabschnitt am Schaft der erfindungsgemäßen Schraube kann in an und für sich bekannter Weise ausgebildet sein. Die vorderen bzw. unteren (d. h. vom Kopf entfernt liegenden) Windungen des selbstformenden Gewindeabschnitts sind typischerweise als gewindeformende (d. h. gewindefurchende oder gegebenenfalls auch gewindeschneidende) Gewindegänge ausgebildet. Die hinteren bzw. oberen (d. h. dem Kopf zugewandten Windungen) des Gewindeabschnitts sind dann typischerweise als tragende Gewindewindungen ausgebildet. Mit den gewindeformenden Gewindegängen (gewindeformender Bereich bzw. Furchabschnitt) kann insbesondere ein metrisches Gewinde (bspw. ein M4-, M5- oder M6-Gewinde, vorzugsweise rechtsgängig) an wenigstens einem der zu fügenden Bauteile ausgebildet werden, in das nachfolgend die entsprechend ausgebildeten tragenden Gewindegänge desselben Gewindeabschnitts eingreifen können. Ebenso kann es sich aber auch um ein nicht-metrisches Gewinde handeln.

Der Lochformungsabschnitt am Schaft der erfindungsgemäßen Schraube kann im Wesentlichen konisch ausgebildet sein. Unter einer konischen Ausbildung wird insbesondere verstanden, dass sich im Lochformungsabschnitt die Durchmesser oder Querschnittsflächen des Schafts nach vorne, d. h. in axialer Richtung zur Schraubenspitze hin bzw. in Einschraubrichtung, kontinuierlich verkleinern bzw. verringern. Der Lochformungsabschnitt kann bspw. eine kegelförmige, eine ballistische, paraboloidische Ausbildung oder dergleichen aufweisen. Bevorzugt ist vorgesehen, dass die Schraubenspitze abgerundet bzw. ballig ausgebildet ist, um dadurch für das Fließlochformen eine ausreichend große Reibkontaktfläche zum lokalen Erwärmen der Verbindungsstelle zu erhalten. Die Schraubenspitze kann aber auch abgeflacht oder kreisringförmig ausgebildet sein und bspw. eine stirnseitige Fläche aufweisen, die sich im wesentlichen senkrecht zur Längsachse des Schafts erstreckt. Bezüglich des Schaftnennquerschnitts (bspw. im Bereich des selbstformenden Gewindeabschnitts) ist eine solche stirnseitige Fläche verhältnismäßig kleinflächig ausgebildet.

Bevorzugt ist vorgesehen, dass die Schneidkante in axialer Richtung nach der abgerundeten Schraubenspitze beginnt und vor dem selbstformenden Gewindeabschnitt bzw. dessen gewindeformenden Bereich endet (oder umgekehrt). In anderen Worten heißt dies, dass sich die Schneidkante in axialer Richtung zwischen der abgerundeten Schraubenspitze und dem selbstformenden Gewindeabschnitt (oder umgekehrt) erstreckt.

Insbesondere ist vorgesehen, dass der Lochformungsabschnitt der erfindungsgemäßen Schraube konisch ausgebildet ist und eine abgerundete Schraubenspitze aufweist, wobei die Schneidkante an einer konischen Mantelfläche dieses Lochformungsabschnitts angeordnet ist und sich zwischen der abgerundeten Schraubenspitze und dem selbstformenden Gewindeabschnitt erstreckt. Besonders bevorzugt ist vorgesehen, dass die Schneidkante in Richtung des selbstformenden Gewindeabschnitts nicht die konische Mantelfläche am Lochformungsabschnitt übersteigt. Dadurch kann gewährleistet werden, dass das von der Schneidkante erzeugte kreisförmige Durchgangsloch in seinem Durchmesser nicht den Außendurchmesser (bzw. Nenndurchmesser) des Gewindeabschnitts überschreitet.

Am Schaft der erfindungsgemäßen Schraube kann zwischen dem selbstformenden Gewindeabschnitt und dem insbesondere konisch ausgebildeten Lochformungsabschnitt wenigstens ein weiterer axialer Abschnitt, der bspw. zylindrisch ausgebildet ist, vorgesehen sein, der insbesondere direkt an den konischen Lochformungsabschnitt angrenzt. Die Schneidkante kann auch in einem solchen axialen Abschnitt angeordnet und insbesondere derart ausgebildet sein, dass diese nicht den Außendurchmesser (bzw. Nenndurchmesser) des Gewindeabschnitts übersteigt. Ferner kann vorgesehen sein, dass sich die Schneidkante sowohl über den konischen Lochformungsabschnitt als auch über wenigstens einen benachbarten und andersartig ausgestalteten axialen Abschnitt des Schafts erstreckt.

Besonders bevorzugt ist vorgesehen, dass die Schneidkante als Verschleißkante ausgebildet ist. Hierunter ist insbesondere zu verstehen, dass die Schneidkante derart ausgebildet ist, dass diese sich beim Einbringen und insbesondere Schneiden eines Durchgangslochs und/oder beim Fließlochformen abnutzt oder abstumpft und dadurch das weitere Fließlochformen im Wesentlichen nicht beeinträchtigt. Bspw. ist denkbar, dass die Schneidkante derart ausgeführt bzw. ausgebildet ist, dass diese das Einbringen bzw. Schneiden eines Durchgangslochs in ein erstes bzw. oberes Bauteil, das insbesondere aus einem spröden Bauteilmaterial gebildet ist, ermöglicht und hierbei einem Verschleiß bzw. einer Abnutzung und/oder einer Abstumpfung unterliegt oder beim Auftreffen auf ein zweites Bauteil, das insbesondere aus einem duktilen Bauteilmaterial gebildet ist, verschleißt oder abstumpft, so dass in das zweite Bauteil kein Durchgangsloch eingebracht bzw. eingeschnitten wird, sondern aufgrund des axialen Anpressdrucks und der Drehbewegung ein Fließloch ausgeformt wird. Die Ausbildung als Verschleißkante kann bspw. durch eine besondere geometrische Ausgestaltung der Schneidkante, durch eine geeignete Werkstoffwahl für die erfindungsgemäße Schraube und/oder durch spezielle Beschichtungen oder Behandlungen der Schneidkante oder Schneidkantenbereiche erfolgen.

Die Schneidkante kann an einer radial nach außen weisenden bzw. vom Schaft vorstehenden Schulter oder dergleichen ausgebildet sein. In anderen Worten heißt dies, dass an der Umfangsfläche und insbesondere an der konischen Mantelfläche des Lochformungsabschnitts eine radial (d. h. im Wesentlichen senkrecht zur Längsachse) abragende Schulter angeordnet ist, an der die Schneidkante ausgebildet ist. In axialer Richtung kann die Schulter mit konstanter oder veränderlicher (radialer) Höhe ausgebildet sein. Bevorzugt ist vorgesehen, dass die Schulter eine Vorderseite oder ähnliches aufweist, an der die scharfkantige Schneidkante ausgebildet ist. Beim Lochschneiden wird die Vorderseite mit der daran befindlichen Schneidkante gegen das Material des betreffenden Bauteils bewegt (so genannter Gegenlauf), wodurch ein kreisförmiges Durchgangsloch erzeugt wird. Besonders bevorzugt ist vorgesehen, dass die Schulter an ihrer von der Vorderseite oder der Schneidkante abgewandten Rückseite stumpf und insbesondere verrundet ausgebildet ist, so dass die Schulter das Fließlochformen, mit einer Drehrichtung (Fließlochform-Drehrichtung) entgegen der Schneid-Drehrichtung, nicht wesentlich beeinträchtigt.

Die Schneidkante kann aber auch an einer radial nach innen weisenden Nut oder dergleichen ausgebildet sein. In anderen Worten heißt dies, dass an der Umfangsfläche und insbesondere an der konischen Mantelfläche des Lochformungsabschnitts eine radial nach innen weisende Nut angeordnet ist, an der die Schneidkante ausgebildet ist. In axialer Richtung kann die Nut mit konstanter oder veränderlicher (radialer) Tiefe ausgebildet sein. Bevorzugt ist vorgesehen, dass die bezüglich der Schneid-Drehrichtung hintere Nutaußenkante als scharfkantige Schneidkante ausgebildet ist, mit der im Gegenlauf ein kreisförmiges Durchgangsloch erzeugt werden kann. Besonders bevorzugt ist vorgesehen, dass die bezüglich der Schneid-Drehrichtung vordere Nutaußenkante stumpf (bspw. verrundet oder mit fließendem Übergang oder Freibereich) ausgebildet ist, so dass diese das Fließlochformen, mit einer Drehrichtung (Fließlochform-Drehrichtung) entgegen der Schneid-Drehrichtung, nicht wesentlich beeinträchtigt.

Besonders bevorzugt ist vorgesehen, dass die Schneidkante, insbesondere bei Ausbildung an einer Schulter oder Nut, wendelförmig ausgebildet ist bzw. wendelartig angeordnet ist, und zwar insbesondere an der konischen Mantelfläche des Lochformungsabschnitts, wie zuvor erläutert. Eine solche wendelförmige bzw. wendelartige Schneidkante könnte auch als lochformender Gewindegang bezeichnet werden. Eine wendelförmige Schneidkante kann z. B. hinsichtlich der Spanabführung beim Schneiden eines Durchgangslochs vorteilig sein.

Die wendelförmige Schneidkante und der selbstformende Gewindeabschnitt am Schaft der erfindungsgemäßen Schraube können die gleiche Orientierung (bzw. Drall- oder Wendelrichtung) aufweisen. Bevorzugt ist jedoch vorgesehen, dass die wendelförmige Schneidkante und der selbstformende Gewindeabschnitt am Schaft der erfindungsgemäßen Schraube eine entgegengesetzte Orientierung (bzw. Drall- oder Wendelrichtung) aufweisen. In anderen Worten heißt dies, dass die wendelförmige Schneidkante und der selbstformende Gewindeabschnitt gegenläufig ausgebildet sind. Durch die Orientierung der wendelförmigen Schneidkante kann die Drehrichtung für das Schneiden eines Durchgangslochs (bzw. zum Lochschneiden) vorgegeben werden. Aufgrund der gegensätzlichen Orientierung erfolgt das Fließlochformen dann in die entgegengesetzte Drehrichtung, wie obenstehend erläutert. D. h. zwischen dem Lochschneiden und dem Fließlochformen ist eine Drehrichtungsumkehr erforderlich. Im Weiteren ist es besonders vorteilhaft, wenn das Fließlochformen und das sich anschließende Gewindeformen in der selben Drehrichtung und somit ohne weitere Drehrichtungsumkehr erfolgen können, was mit der vorgeschlagenen Ausgestaltung ermöglicht wird. Durch die vorgeschlagene Ausgestaltung kann ferner auch ein Verkanten oder ungewolltes Eingreifen des selbstformenden Gewindeabschnitts beim Schneiden eines Durchgangslochs und/oder ein Verkanten der Schneidkante beim Fließlochformen und Gewindeformen an einem der zu fügenden Bauteile verhindert werden.

Bevorzugt ist ferner vorgesehen, dass sich die wendelförmige Schneidkante am Lochformungsabschnitt in Umfangsrichtung näherungsweise über einen Halbkreis erstreckt. In anderen Worten heißt dies, dass sich die wendelförmige Schneidkante (bezüglich einer axialen Draufsicht) um 180° um den Schaft und insbesondere um den Lochformungsabschnitt herumwindet. Bevorzugt sind übrigens zwei oder drei solcher Schneidkanten vorgesehen, die im Wesentlichen identisch ausgebildet und (bezüglich einer axialen Draufsicht) um 180° oder um 120° zueinander versetzt am Umfang des Schafts bzw. Lochformungsabschnitts angeordnet sind, so dass sich diese symmetrisch mit einem konstanten Umfangsabstand zueinander um den Lochformungsabschnitt bzw. den zylindrischen Abschnitt herumwinden. Für einen gleichmäßigen Rundlauf sind drei oder mehr Schneidkanten von Vorteil.

In besonders bevorzugter Weise können mehrere Schneidkanten auch unsymmetrisch zueinander am Schaft und insbesondere am Lochformungsabschnitt der erfindungsgemäßen loch- und gewindeformenden Schraube angeordnet sein. Überraschend hat sich gezeigt, dass eine solche unsymmetrische Anordnung zu sehr gleichmäßigen Reib- und Anlageflächen führt.

Eine besonders bevorzugte Ausgestaltung der erfindungsgemäßen Schraube sieht vor, dass die Schneidkante an der Bohrungsöffnung einer Querbohrung im Schaft, insbesondere im Lochformungsabschnitt, ausgebildet ist. Bevorzugt handelt es sich um eine schräge Querbohrung und/oder um eine nicht durchgängige Querbohrung. Dies wird nachfolgend im Zusammenhang mit den Figuren noch näher erläutert.

Der Gewindeabschnitt am Schaft der erfindungsgemäßen Schraube kann in axialer Richtung direkt bis an die Unterseite des Kopfs heranreichen. Bevorzugt ist jedoch vorgesehen, dass der Schaft in seinem sich an den Kopf unmittelbar anschließenden axialen Abschnitt gewindefrei ausgebildet ist. Ebenso ist bevorzugt vorgesehen, dass der Schaft in seinem sich an den Kopf unmittelbar anschließenden axialen Abschnitt bezüglich des Außendurchmessers des selbstformenden Gewindeabschnitts (am Schaft) mit einem geringeren Durchmesser ausgebildet ist. Besonders bevorzugt ist ferner vorgesehen, dass der Schaft in seinem sich an den Kopf unmittelbar anschließenden axialen Abschnitt gewindefrei ausgebildet ist und dass dieser gewindefreie Abschnitt bezüglich des Außendurchmessers des selbstformenden Gewindeabschnitts zumindest abschnittsweise auch mit einem geringeren Durchmesser ausgebildet ist. Diese Ausbildungsmöglichkeiten sind z. B. vorteilhaft im Hinblick auf die Herstellung, insbesondere für das Gewindewalzen. Ein geringerer Durchmesser des Schafts in dem am Kopf angrenzenden Abschnitt ermöglicht auch ein elastisches oder plastisches Verformen des Materials des oberen Bauteils beim Anziehen der erfindungsgemäßen Schraube auf das gewünschte Drehmoment. (Das obere Bauteil ist das im Bauteilverbund dem Kopf der Schraube zugewandte Bauteil, auf dem der Kopf auch zur Anlage kommt.)

Der Kopf einer erfindungsgemäßen loch- und gewindeformenden Schraube kann optional an seiner Unterseite mit einer umlaufenden bzw. den Schaft umrundenden Nut (bzw. Ausnehmung, Aushöhlung oder dergleichen) ausgebildet sein, die verschiedenartig gestaltet sein kann. Die Unterseite des Kopfs ist die Seite an der der Schaft angeformt ist. Ferner kommt die Unterseite des Kopfs beim Fügen bzw. Verschrauben der Bauteile mit dem obersten Bauteil in Anlage. Die Nut kann dazu dienen, während des Eindreh- bzw. Einschraubvorgangs entgegen der Einschraubrichtung durch Verformung aufsteigendes Bauteilmaterial aufzunehmen, so dass sich der Kopf bzw. die Unterseite des Kopfs vollflächig und dichtend an das obere bzw. oberste Bauteil anlegen kann.

Ein Bauteilverbund gemäß dem nebengeordneten Anspruch umfasst ein erstes Bauteil und ein zweites Bauteil die durch wenigstens eine erfindungsgemäße loch- und gewindeformende Schraube mechanisch gefügt bzw. miteinander verbunden sind.

Ein solcher Bauteilverbund kann bspw. ein Bauteilverbund für eine Kraftfahrzeugkarosserie sein. Ferner kann ein solcher Bauteilverbund mehr als zwei Bauteile umfassen, die durch wenigstens eine erfindungsgemäße loch- und gewindeformende Schraube mechanisch miteinander verbunden bzw. gefügt sind. Bevorzugt handelt es sich um einen Mischbau-Bauteilverbund, in dem Bauteile aus verschiedenen Bauteilmaterialien zusammengefasst sind.

Bevorzugt ist vorgesehen, dass die loch- und gewindeformende Schraube mit ihrem Schaft das erste und obere Bauteil durch ein eingebrachtes und insbesondere eingeschnittenes bzw. eingefrästes Durchgangsloch hindurch durchdringt (bzw. durchstreckt oder durchgreift) und mit ihrem am Schaft ausgebildeten selbstformenden Gewindeabschnitt bzw. mit dessen tragenden Gewindewindungen in ein am zweiten und unteren Bauteil ausgebildetes Fließloch kraft- und formschlüssig eingreift. Sowohl das eingebrachte Durchgangsloch im ersten und oberen Bauteil als auch der Gewindeeingriff mit dem zweiten und unteren Bauteil sind direkt mit der erfindungsgemäßen loch- und gewindeformende Schraube herbeigeführt worden und zwar durch Direktverschraubung, d. h. ohne separates Vorlochen. Der Gewindeeingriff zwischen der Schraube und dem zweiten unteren Bauteil ist durch Fließlochformen und anschließendes Gewindeformen mittels derselben Schraube herbeigeführt, wie obenstehend erläutert. Mit dem vorausgegangenen Erzeugen eines Durchgangsloch im oberen Bauteil wurde quasi der Weg für ein nachfolgendes Fließlochformen im unteren Bauteil frei gemacht. Ebenso ist im Übrigen auch denkbar, dass auch zwischen der Schraube und dem ersten oberen Bauteil ein Gewindeeingriff gegeben bzw. herbeigeführt ist.

Die Bauteile können blechähnliche Halbzeuge, Profile, Gussteile und dergleichen aus metallischen Materialien (bzw. Werkstoffen) und/oder aus nicht metallischen Materialien (bzw. Werkstoffen) sein. Bevorzugt ist vorgesehen, dass beide Bauteile aus blechähnlichen Halbzeugen gebildet sind. Ebenso ist bevorzugt vorgesehen, dass das erste obere Bauteil aus einem blechähnlichen Halbzeug gebildet ist und dass es sich bei dem zweiten unteren Bauteil um ein Profil, ein Gussteil oder dergleichen handelt.

Bevorzugt ist vorgesehen, dass zumindest eines der Bauteile aus einem Kunststoff und besonders bevorzugt aus einem faserverstärkten Kunststoff bzw. einem Faserverbundmaterial gebildet ist. Insbesondere ist vorgesehen, dass das erste obere Bauteil aus einem faserverstärkten Kunststoff und insbesondere aus einem kohlenstofffaserverstärkten Kunststoff gebildet ist und dass das zweite untere Bauteil aus einem Metallmaterial wie insbesondere einem Aluminiummaterial oder einem Stahlmaterial gebildet ist. Es kann jedoch auch eine umgekehrte Anordnung vorgesehen sein. Ebenso können sowohl das obere als auch das untere Bauteil aus Kunststoff, besonders bevorzugt aus faserverstärkten Kunststoff bzw. Faserverbundmaterial und insbesondere aus kohlenstofffaserverstärkten Kunststoff gebildet sein. Ebenso können sowohl das obere als auch das untere Bauteil aus Metallmaterial gebildet sein.

Besonders bevorzugt ist vorgesehen, dass zumindest das obere Bauteil aus einem spröden Bauteilmaterial gebildet ist, das sich unter Normalbedingungen im Wesentlichen nicht plastisch verformen lässt und somit für das konventionelle Fließlochformen (gemäß Stand der Technik) ungeeignet ist.

Die erfindungsgemäße loch- und gewindeformende Schraube eignet sich demnach hervorragend für das Herstellen von Mischbauverbindungen ohne Vorlochen, bzw. für das Direktverschrauben von Bauteilen bzw. Baukomponenten die aus unterschiedlichen Materialien mit insbesondere grundlegend unterschiedlichen Materialeigenschaften (bspw. spröde und duktil) gebildet sind. Insbesondere eignet sich die erfindungsgemäße loch- und gewindeformende Schraube zur mechanischen Verbindung von Bauteilen, die aus einem spröden Bauteilmaterial, wie bspw. einem faserverstärkten Kunststoff bzw. einem Faserverbundmaterial und insbesondere aus einem kohlenstofffaserverstärkten Kunststoff, gebildet sind, und Bauteilen, die aus duktilen Bauteilmaterial, wie bspw. einem Aluminiummaterial oder einem Stahlmaterial, gebildet sind.

Besonders bevorzugt ist vorgesehen, dass die im Bauteilverbund gefügten Bauteile zumindest an der mit einer erfindungsgemäßen loch- und gewindeformenden Schraube herbeigeführten Verbindungs- bzw. Fügestelle zusätzlich miteinander verklebt werden bzw. verklebt sind. Gerade hier erweist sich die Verwendung bzw. der Einsatz einer erfindungsgemäßen loch- und gewindeformenden Schraube, die durch Direktverschraubung bzw. ohne Vorlochen eingebracht werden kann, als besonders vorteilhaft, da besondere Vorkehrungen im Zusammenhang mit den bislang üblichen Vorlöchern (insbesondere bei faserverstärkten Kunststoffen) nicht erforderlich sind, wie bspw. das Freihalten des Vorlochbereichs von Klebstoff, was zu einer Unterbrechung der Klebenaht oder Klebefläche und somit zu Festigkeits- und/oder Haltbarkeitseinbußen führte. Auch eine Verschmutzung der Fertigungsanlage bzw. deren Werkzeuge durch austretenden Klebstoff entfällt.

Die Erfindung wird nachfolgend anhand der schematischen und nicht maßstabsgetreuen Figuren beispielhaft und in nicht einschränkender Weise näher erläutert. Die in den Figuren gezeigten und/oder nachfolgend erläuterten Merkmale können, unabhängig von konkreten Merkmalskombinationen, allgemeine Merkmale der Erfindung sein.
- Fig. 1: zeigt in einer Seitenansicht eine erste Ausführungsmöglichkeit für eine erfindungsgemäße loch- und gewindeformende Schraube.
- Fig. 2: zeigt in mehreren Schnittdarstellungen mögliche Ausgestaltungen von Schneidkanten an der Schraube aus Fig. 1.
- Fig. 3: zeigt in einer Schnittdarstellung einen mit der Schraube aus Fig. 1 hergestellten Bauteilverbund.
- Fig. 4: zeigt in einer Seitenansicht eine zweite Ausführungsmöglichkeit für eine erfindungsgemäße loch- und gewindeformende Schraube.
- Fig. 5: zeigt in einer Seitenansicht eine dritte Ausführungsmöglichkeit für eine erfindungsgemäße loch- und gewindeformende Schraube.
- Fig. 6: zeigt in einer Seitenansicht eine vierte Ausführungsmöglichkeit für eine erfindungsgemäße loch- und gewindeformende Schraube, wobei nur der untere bzw. vordere Bereich des Schafts dargestellt ist.
- Fig. 7: zeigt in mehreren Seitenansichten mit Teilschnitten verschiedene Ausgestaltungen einer fünften Ausführungsmöglichkeit für eine erfindungsgemäße loch- und gewindeformende Schraube, wobei nur die unteren bzw. vorderen Bereiche der Schäfte dargestellt sind.
- Fig. 8: zeigt weitere Ausgestaltungen für eine erfindungsgemäße loch- und gewindeformende Schraube, wobei nur die unteren bzw. vorderen Bereiche der Schäfte dargestellt sind.
- Fig. 9: zeigt mögliche Querschnittformen für den Schaft einer erfindungsgemäßen loch- und gewindeformenden Schraube, insbesondere für die in Fig. 8 gezeigten Schäfte.

Die nachfolgend verwendeten Richtungs- und Ortsangaben beziehen sich in nicht einschränkender Weise lediglich auf die in den Figuren gezeigten Darstellungen, die von realen Gegebenheiten und Einbausituationen abweichen können. Die in den Figuren gezeigten und/oder nachfolgend erläuterten Merkmale verschiedener Ausführungs- und Ausgestaltungsmöglichkeiten einer erfindungsgemäßen loch- und gewindeformenden Schraube können im Rahmen der Erfindung auch zu einer anderen Ausführungsmöglichkeit kombiniert werden.

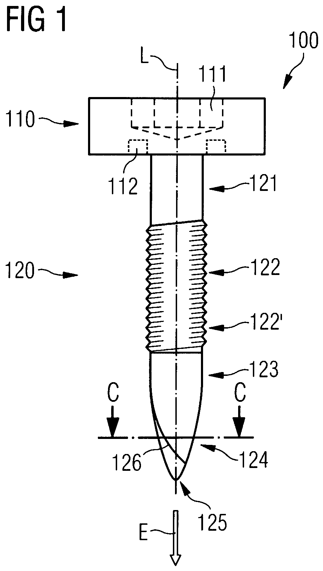

Fig. 1 zeigt eine erfindungsgemäße loch- und gewindeformende Schraube 100 (nachfolgend nur als Schraube bezeichnet) in einer ersten Ausführungsmöglichkeit. Die Schraube 100 ist einstückig und im Wesentlichen rotationssymmetrisch aus einem umgeformten Metallmaterial gebildet. Die Längsachse ist mit L bezeichnet. Die Schraube 100 weist einen Kopf bzw. Schraubenkopf 110 auf, an dem wenigstens ein als Innensechskant ausgebildetes Formschlusselement bzw. eine Werkzeugaufnahme 111 zum Ansetzen eines Werkzeugs ausgebildet ist. Das Formschlusselement 111 kann auch anders gestaltet sein. Der gezeigte Kopf 110 ist als zylindrischer Flachkopf ausgebildet. Ebenso könnte der Kopf 110 auch als Senkkopf oder anders ausgebildet sein. An der Unterseite des Kopfs 110 ist eine Nut bzw. Unterkopfnut 112 ausgebildet, die verschiedenartig und insbesondere auch verrundet (bzw. konkav) gestaltet sein kann.

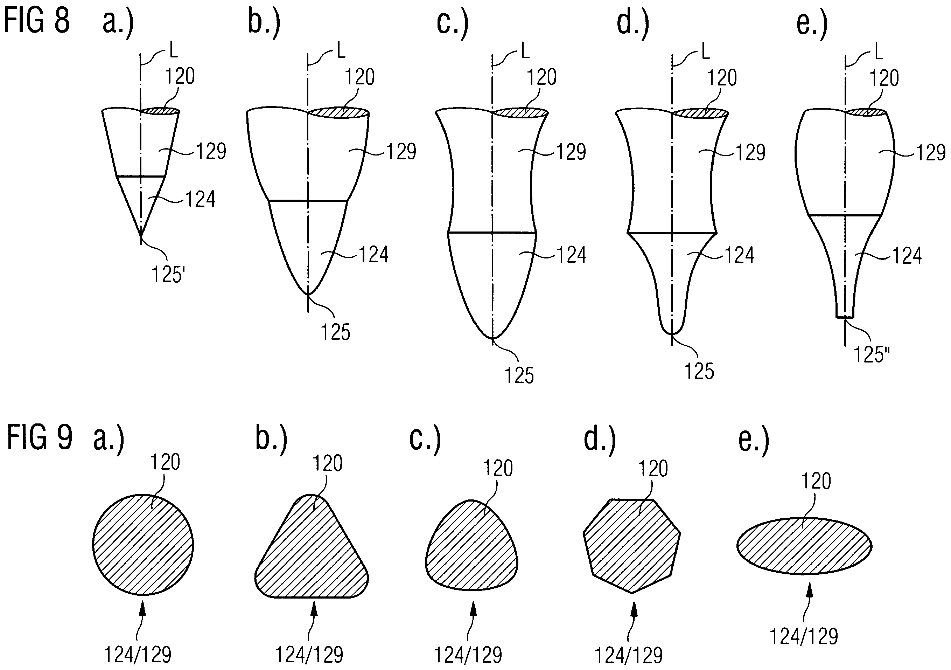

Die Schraube 100 weist ferner einen am Kopf 110 angeformten Schaft bzw. Bolzen 120 auf. Der gerade Schaft 120 erstreckt sich in einer axialen Richtung L vom Kopf 110 weg. Der Schaft 120 weist ausgehend vom Kopf 110 in axialer Richtung einen gewindelosen Abschnitt 121, einen selbstformenden Gewindeabschnitt 122, einen zylindrischen Abschnitt 123 und einen konischen und annähernd kegelförmigen Lochformungsabschnitt 124 mit einer verrundeten Schraubenspitze 125 auf. Der Lochformungsabschnitt 124 befindet sich somit an dem vom Kopf 110 abgewandten axialen Ende des Schafts 120. Die unteren bzw. vorderen vom Kopf 110 entfernt liegenden Windungen 122' des selbstformenden Gewindeabschnitts 122 sind als gewindeformende Gewindegänge ausgebildet (so genannter Furchabschnitt). Die Funktion der einzelnen Abschnitte wird nachfolgend noch näher erläutert. Der Schaft 120 kann im Querschnitt kreisrund, elliptisch, polygon, trilobular oder dergleichen ausgebildet sein (siehe auch Fig. 9). Der Schaft 120 kann entlang seines axialen Verlaufs auch mit unterschiedlichen Querschnittsformen ausgebildet sein.

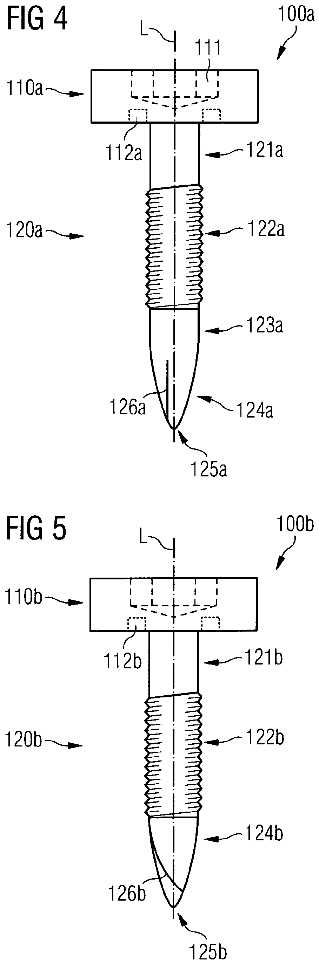

Mit einer solchen loch- und gewindeformenden Schraube 100 können zwei (oder auch mehr als zwei) Bauteile durch Direktverschrauben, d. h. ohne Vorlochen, miteinander verbunden bzw. mechanisch gefügt werden, wie in der DE 39 09 725 C1 oder auch in der DE 10 2010 050 979 A1 beschrieben. Hierzu wird die Schraube 100 mit ihrem Lochformungsabschnitt 124 und der daran ausgebildeten verrundeten Schraubenspitze 125 an der Einschraubstelle bzw. Verbindungsstelle durch Aufbringen einer axialen Druckkraft gegen die zu fügenden und zueinander positionierten Bauteile gedrückt und in Drehung um die Längsachse L versetzt. Infolge der zunächst mit der verrundeten Schraubenspitze 125 erzeugten Reibung werden die Bauteile an der Verbindungsstelle lokal erwärmt, was eine Plastifizierung der Bauteilmaterialien ermöglicht, die hieraufhin mit dem Lochformungsabschnitt 124 in radialer Richtung und in axialer Richtung unter Ausformung eines Durchzugs bzw. Fließlochs plastisch verformt und gelocht werden. Der zylindrische Abschnitt 123 am Schaft 120 dient der Kalibrierung der eingeformten Löcher, wobei ein solcher zylindrischer Abschnitt 123 zwischen dem Lochformungsabschnitt 124 und dem selbstformenden Gewindeabschnitt 122 nicht unbedingt erforderlich ist (siehe Fig. 5). In den beim Lochen der Bauteile ausgeformten Durchzug kann dann der selbstformende Gewindeabschnitt 122 eingreifen, wozu die unteren bzw. vorderen Windungen 122' des selbstformenden Gewindeabschnitts 122 als gewindeformende Gewindegänge und die oberen bzw. hinteren (d. h. dem Kopf 110 zugewandten) Windungen des Gewindeabschnitts 122 als tragende Gewindewindungen ausgebildet sind. Hierbei wird eine kraft- und formschlüssige Verbindung zwischen den Bauteilen herbeigeführt. Der Einschraubvorgang ist beendet, wenn die Unterseite des Kopfs 110 am obersten Bauteil des Bauteilverbunds zur Anlage kommt. Die auf die Schraube 100 aufgebrachten Axialkräfte, Drehgeschwindigkeiten und Drehmomente können über dem Einschraubvorgang variieren.

Das zuvor erläuterte Direktverschrauben setzt gemäß dem Stand der Technik eine plastische Verformbarkeit der Bauteilmaterialien voraus. Um auch andere Bauteile, d. h. Bauteile die aus nicht plastisch verformbaren Materialien bzw. Werkstoffen gebildet sind, ohne Vorlochen mit einer solchen loch- und gewindeformenden Schraube verschrauben und auf diese Weise kraft- und formschlüssig fügen bzw. verbinden zu können, ist die erfindungsgemäße Schraube 100 am Lochformungsabschnitt 124 mit mehreren Schneidkanten 126 ausgebildet. Die Schneidkanten 126 ermöglichen das Einbringen eines Durchgangslochs (ohne Durchzug) in wenigstens eines der zu verschraubenden Bauteile, insbesondere in das obere Bauteil, ohne das Fließlochformen in einem anderen der zu verschraubenden Bauteile, insbesondere im unteren Bauteil, zu beeinträchtigen. Bei der gezeigten Ausführungsmöglichkeit einer erfindungsgemäßen loch- und gewindeformenden Schraube sind die Schneidkanten 126 derart ausgebildet, dass diese beim Drehen der Schraube 100 in eine Drehrichtung das Schneiden eines Durchgangslochs ermöglichen und beim Drehen der Schraube 100 in die andere bzw. entgegengesetzte Drehrichtung das Fließlochformen mit Ausbildung eines Durchzugs erlauben bzw. zulassen.

Die in Fig. 1 gezeigte Schraube 100 ist mit zwei wendelförmigen bzw. wendelartigen Schneidkanten 126 ausgebildet, die an der konischen Mantelfläche bzw. Kegelmantelfläche des Lochformungsabschnitts 124 symmetrisch angeordnet sind und sich in Umfangsrichtung jeweils über 180° bzw. im Halbkreis um den Lochformungsabschnitt 124 herumwinden. In der gezeigten Darstellung ist nur eine Schneidkante 126 sichtbar. Bezüglich der Orientierung bzw. Drallrichtung des Gewindeabschnitts 122 weisen die beiden wendelförmigen Schneidkanten bzw. Schneiden 126 eine entgegengesetzte Orientierung bzw. Drallrichtung auf. Bei der dargestellten Schraube 100 ist der selbstformende Gewindeabschnitt 122 rechtsgängig ausgebildet. Demnach sind die wendelförmigen Schneidkanten 126 linksgängig ausgebildet. Dies entspricht einer bevorzugten Ausgestaltung einer erfindungsgemäßen Schraube.

Bezüglich der axialen Erstreckungsrichtung des Schafts 120 liegen die Schneidkanten 126 ausgehend von der Schraubenspitze 125 vor dem selbstformenden Gewindeabschnitt 122. Die gezeigte Ausführungsmöglichkeit weist zwischen dem selbstformenden Gewindeabschnitt 122 und dem Lochformungsabschnitt 124 einen zylindrischen Abschnitt 123 auf, wobei die Schneidkanten 126 nur am Lochformungsabschnitt 124 angeordnet sind und nicht bis in den zylindrischen Abschnitt 123 hineinragen. In der anderen axialen Richtung erstrecken sich die Schneidkanten 126 nicht bis zur Schraubenspitze 125. D. h. die Schneidkanten 126 übersteigen in beiden axialen Richtungen nicht die Mantelfläche des Lochformungsabschnitts 124. Dadurch bleibt einerseits die Funktionsfähigkeit der abgerundeten Schraubspitze 125 im Hinblick auf das Fließlochformen erhalten und andererseits wird gewährleistet, dass der über die Schneidkanten 126 gemessene Außendurchmesser des Schafts 120 den Außendurchmesser des selbstformenden Gewindeabschnitts 122 nicht übersteigt. D. h. die Schneidkanten 126 überschneiden in diesem Fall nicht den Nenndurchmesser des in den Bauteilen zu formenden Gewindes.

Es sind jedoch auch Ausgestaltungen denkbar, bei denen sich die Schneidkanten 126 bis in den zylindrischen Abschnitt 123 hineinerstrecken und/oder bis zur Schraubenspitze 125 reichen. Auch sind Ausgestaltungen denkbar, bei denen die Schneidkanten 126 im Wesentlichen nur im zylindrischen Abschnitt 123 oder einem sonstigen axialen Abschnitt (siehe z. B. Bezugszeichen 129 in Fig. 8) zwischen dem selbstformenden Gewindeabschnitt 122 und dem Lochformungsabschnitt 124 angeordnet sind. Die Schneidkanten 126 können somit bis an den selbstformenden Gewindeabschnitt 122 heranreichen oder sogar bis in den selbstformenden Gewindeabschnitt 122 und insbesondere in den Furchabschnitt 122' hineinreichen.

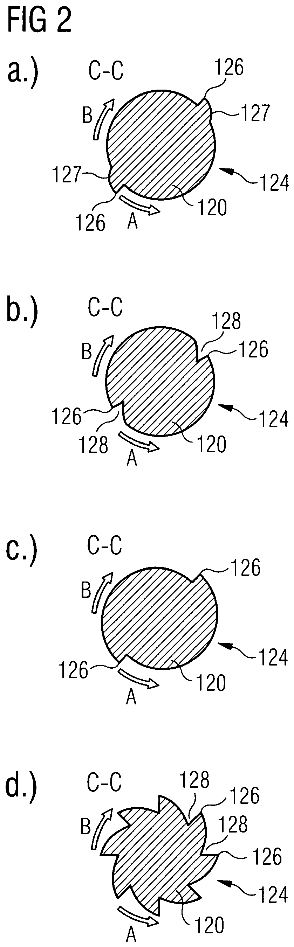

Mögliche Ausgestaltungen der Schneidkanten 126 werden nachfolgend anhand der in Fig. 2 gezeigten Schnittdarstellungen gemäß dem in Fig. 1 angegebenen Schnittverlauf C-C näher erläutert. Die Schneidkanten 126 können jedoch auch anders ausgebildet sein.

Fig. 2a zeigt eine erste Ausgestaltungsmöglichkeit bei der die beiden Schneidkanten 126 an radial nach außen weisenden bzw. von der konischen Mantelfläche des Lochformungsabschnitts 124 abragenden Schultern 127 ausgebildet sind. In vergleichbarer Weise können auch mehr als zwei Schneidkanten 126, bspw. drei Schneidkanten 126, vorgesehen sein. In axialer Richtung können die Schultern 127 mit konstanter radialer Höhe oder mit veränderlicher radialer Höhe ausgebildet sein.

Die Schultern 127 verlaufen wendelförmig (wie oben beschrieben) und sind symmetrisch zueinander angeordnet bzw. ausgebildet. Ebenso ist auch eine unsymmetrische Anordnung denkbar. Die Schultern 127 umfassen jeweils eine in die Schneid-Drehrichtung A weisende Vorderseite, an der die scharfkantigen Schneidkanten 126 ausgebildet sind. Die Schneidkanten 126 liegen auf einem Umfangskreis, der größer ist, als der Durchmesser des Schafts 120 im Lochformungsabschnitt 124. Beim Lochschneiden eines Durchgangslochs werden die Vorderseiten mit den daran befindlichen Schneidkanten 126 im Gegenlauf bzw. in der Schneid-Drehrichtung A durch das Material des betreffenden Bauteils bewegt, wodurch zumindest teilweise mit einer Zerspanungswirkung ein durchgängiges Kreisloch bzw. Rundloch erzeugt wird. An ihren von den Vorderseiten oder den Schneidkanten 126 abgewandten Rückseiten sind die Schultern 127 stumpf und insbesondere verrundet ausgebildet, so dass die Schultern 127 das Fließlochformen mit einer der Schneid-Drehrichtung A entgegensetzen Drehrichtung B (Fließlochform-Drehrichtung) nicht wesentlich beeinträchtigen.

Fig. 2b zeigt eine zweite Ausgestaltungsmöglichkeit bei der die beiden Schneidkanten 126 an radial nach innen weisenden Nuten bzw. Schneidnuten 128 ausgebildet sind. Ebenso können auch mehr als zwei Schneidnuten 128 vorgesehen sein. Die Nuten 128 können auch als Schneidkerben bezeichnet werden und eine andere als die gezeigte Querschnittsform aufweisen. In axialer Richtung können die Nuten 128 mit konstanter radialer Tiefe oder mit veränderlicher radialer Tiefe ausgebildet sein.

Die Nuten 128 verlaufen wendelförmig (wie oben beschrieben) und sind symmetrisch oder gegebenenfalls auch unsymmetrisch zueinander angeordnet bzw. ausgebildet. Die bezüglich der Schneid-Drehrichtung A hinteren Nutaußenkanten sind als scharfkantige Schneidkanten 126 ausgebildet, mit denen im Gegenlauf ein durchgängiges Kreisloch bzw. Rundloch erzeugt werden kann, wie vorausgehend erläutert. Die bezüglich der Schneid-Drehrichtung A vorderen Nutaußenkanten sind stumpf und insbesondere verrundet (bzw. mit fließenden Übergängen) ausgebildet, so dass die Nuten 128 das Fließlochformen mit einer der Schneid-Drehrichtung A entgegensetzen Drehrichtung B (Fließlochform-Drehrichtung) nicht wesentlich beeinträchtigen. Die Nuten 128 begünstigen auch den Abtransport von Zerspanungsprodukten (Spanabfuhr) entgegen der Einschraubrichtung E (wie in Fig. 1 angegeben).

Die Fig. 2c und 2d zeigen weitere Ausgestaltungsmöglichkeiten, für die die vorausgehenden Erläuterungen im Zusammenhang mit den Fig. 2a und 2b analog gelten. Die Ausgestaltungsmöglichkeit gemäß Fig. 2c ist insbesondere durch Freibereiche bzw. Freiwinkel vor den Schneidkanten 126 gekennzeichnet. Die Freibereiche begünstigen auch den Abtransport von Zerspanungsprodukten entgegen der Einschraubrichtung E. Die Ausgestaltungsmöglichkeit gemäß Fig. 2d ist insbesondere durch eine große Anzahl (größer zwei) von Schneidkanten 126 gekennzeichnet, wodurch sich eine sternförmige Querschnittskontur im Abschnitt 124 ergibt ergibt.

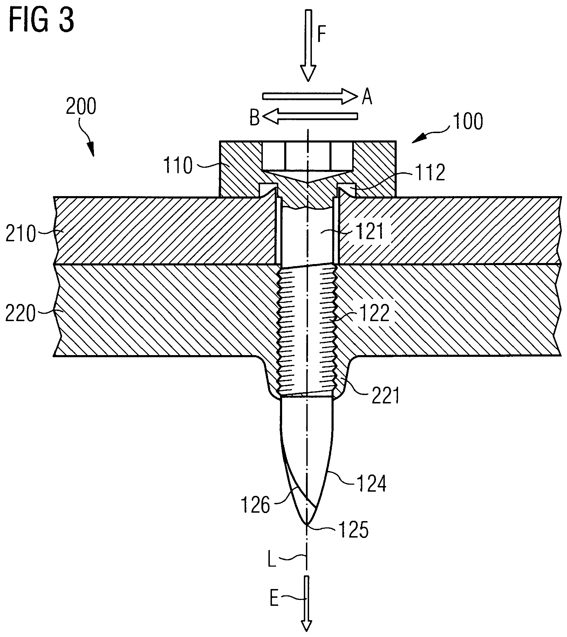

Fig. 3 zeigt einen Ausschnitt aus einem Bauteilverbund 200, der ein erstes oberes blechähnliches Bauteil 210, ein zweites unteres blechähnliches Bauteil 220 und wenigstens eine Schraube 100 umfasst. Die Darstellung zeigt nur eine einzelne Fügestelle bzw. Versschraubungsstelle an der beide Bauteile 210 und 220 mit einer erfindungsgemäßen Schraube 100 gefügt bzw. verbunden sind, wobei die Bauteile 210 und 220 auch mit mehreren Schrauben 100 gefügt sein können. Zusätzlich können die Bauteile 210 und 220, zumindest an der Versschraubungsstelle, miteinander flächig verklebt sein. Die Bauteile 210 und 220 können auch als Fügepartner bezeichnet werden. Ein Bauteilverbund 200 kann auch mehr als zwei Bauteile umfassen.

Das obere Bauteil 210 ist das dem Kopf 110 der Schraube 100 zugewandte Bauteil, an dem auch der Kopf 110 bzw. dessen Unterseite anliegt. Bezüglich der Schraube 100 weist das obere bzw. erste Bauteil 210 eine Eintrittsseite aus. Das untere Bauteil 220 ist das vom Kopf 110 abgewandte Bauteil. Das untere Bauteil 220 weist bezüglich der Schraube 100 eine Austrittsseite aus. Das obere blechähnliche Bauteil 210 ist beispielhaft aus einem faserverstärkten Kunststoff und insbesondere aus einem CFK-Material gebildet, wobei diese Materialien keine plastischen Eigenschaften aufweisen. Bei dem unteren Bauteil 220 handelt es sich beispielhaft um ein Aluminium- oder Stahlblech. Sowohl das obere Bauteil 210 als auch das untere Bauteil 220 können eine räumliche Formgebung aufweisen. Insbesondere das untere Bauteil 220 kann auch eine Profilleiste, ein Gusskörper mit Befestigungsflansch oder dergleichen sein.

Die beiden Bauteile 210 und 220 sind form- und kraftschlüssig mit der Schraube 100 verbunden, derart, dass die Schraube 100 mit ihrem Schaft 120 das obere Bauteil 210 durch ein eingebrachtes und insbesondere eingeschnittenes Durchgangsloch hindurch durchstreckt und mit ihrem am Schaft ausgebildeten selbstformenden Gewindeabschnitt 122 in ein am unteren Bauteil 220 ausgebildetes Fließloch kraft- und formschlüssig eingreift. Das obere Bauteil 210 wird hierbei quasi zwischen dem Kopf 110 und dem unteren Bauteil 220 eingeklemmt. Der beim Fließlochformen am unteren Bauteil 220 ausgebildete Durchzug ist mit 221 bezeichnet. In Abhängigkeit von der Bauteildicke der Bauteile 210 und 220 ragt der Lochformungsabschnitt 124 der Schraube 100 an der Austrittsseite aus dem unteren Bauteil 220 heraus oder gegebenenfalls in einen zum unteren Bauteil 220 gehörenden Hohlraum hinein. Abweichend zu der in Fig. 3 gezeigten Darstellung können auch der selbstformende Gewindeabschnitt 122 und insbesondere die gewindeformenden Gewindegänge 122' (Furchabschnitt) aus dem unteren Bauteil 220 herausragen.

Zum Direktverschrauben werden die beiden Bauteile 210 und 220 zunächst zueinander positioniert. Anschließend wird die Schraube 100 mit ihrer abgerundeten Schraubenspitze 125 auf der Eintrittseite gegen das obere Bauteil 210 gedrückt, was mit einer geeigneten Werkzeugeinrichtung erfolgt, die mittels eines Werkzeugs formschlüssig mit der Werkzeugaufnahme 111 verbunden wird. Die axial wirkende Druckkraft ist mit F bezeichnet, wobei die Richtung der Druckkraft F auch der Einschraubrichtung E der Schraube 100 entspricht. Durch Drehen der Schraube 100 in die Schneid-Drehrichtung A wird in das obere Bauteil 210 mittels der Schneidkanten 126 ein Durchgangsloch eingebracht, was zumindest teilweise mit einer Zerspanung des Bauteilmaterials einhergeht, wie obenstehend ausführlich erläutert. In etwa dann, wenn die Schraubenspitze 125 auf das untere Bauteil 220 trifft, erfolgt eine Drehrichtungsumkehr, so dass die Schraube 100 fortan in die entgegengesetzte Drehrichtung B (Fließlochform-Drehrichtung) gedreht wird. Hierbei wird ohne weitere Drehrichtungsumkehr in das untere Bauteil 220 ein Fließloch eingeformt, in welches dann im Weiteren der selbstformende Gewindeabschnitt 122 am Schaft 120 der Schraube 120 formschlüssig eingreift. Das Fließlochformen und das Gewindeformen erfolgen demnach in der selben Drehrichtung B.

Gemäß den vorausgehenden Erläuterungen ist zum Schneiden eines Durchgangslochs im oberen Bauteil 210 ein Linkslauf A der Schraube 100 erforderlich. Zum Fließloch- und Gewindeformen im unteren Bauteil 220 ist ein Rechtslauf B der Schraube 100 erforderlich. Die Drehrichtungen für das Erzeugen bzw. Schneiden eines Durchgangslochs und für das Fließlochformen und anschließende Gewindeformen ergeben sich aus der Gestaltung der Schneidkanten 126 und der Orientierung des selbstformenden Gewindeabschnitts 122. Durch eine andere Ausgestaltung der Schraube 100 können die Drehrichtungen auch anders sein. Ferner ist denkbar, dass das Erzeugen bzw. Schneiden eines Durchgangslochs und das anschließende Fließlochformen und Gewindeformen in der selben Drehrichtung erfolgen. Ferner ist denkbar, dass zwischen dem Fließlochformen und dem Gewindeformen eine Drehrichtungsumkehr vorgesehen ist.

Besonders bevorzugt ist vorgesehen, dass die Schneidkanten 126 als Verschleißkanten ausgebildet sind, die sich während des Einschraubvorgangs und insbesondere während dem Erzeugen bzw. Schneiden eines Durchgangslochs (d. h. während des Schneidvorgangs) und/oder zu Beginn des Fließlochformens (d. h. während des Fließlochvorgangs) abnutzen bzw. abstumpfen, um das weitere Fließlochformen nicht zu beeinträchtigen und/oder um den erzeugten Innendurchmesser des erzeugten Fließlochs gering zu halten (insbesondere unterhalb des Außen- bzw. Nenndurchmessers des selbstformenden Gewindeabschnitts 122).

Beim Anziehen der Schraube 100 wird das unter dem Kopf 110 der Schraube 100 befindliche Bauteilmaterial des oberen Bauteils 210 gegebenenfalls verformt. Indem der Schaft 120 in dem sich an den Kopf 110 unmittelbar anschließenden axialen Abschnitt 121 gewindefrei und mit einem geringeren Durchmesser als der Außendurchmesser des selbstformenden Gewindeabschnitts 122 ausgebildet ist, kann sich das Bauteilmaterial unter dem Kopf 110 bedingt in den Lochspalt hinein verformen. Aufsteigendes Bauteilmaterial kann sich in die Nut 112 an der Unterseite des Kopfs 110 hineinverformen, so dass eine flächige und dichte Anlage des Kopfs 110 am oberen Bauteil 210 gewährleistet ist. Die Schraube 100 kann jedoch auch ohne eine solche Nut 112 ausgebildet sein, wodurch die Kopfauflagefläche vergrößert und die Flächenpressung am oberen Bauteil 210 verringert werden kann.

Fig. 4 zeigt eine zweite Ausführungsmöglichkeit einer erfindungsgemäßen loch- und gewindeformenden Schraube. Im Hinblick auf die anderen Ausführungsmöglichkeiten werden für gleiche oder funktionsgleiche Elemente bzw. Komponenten die selben Bezugszeichen jedoch mit dem Zusatz "a" gebraucht. Bis auf die nachfolgend erläuterten Unterschiede kann die Schraube 100a alle Merkmale der anderen Ausführungsmöglichkeiten aufweisen. Die entsprechenden Erläuterungen gelten analog.

Bei der Schraube 100a sind die Schneidkanten 126a am Lochformungsabschnitt 124a gerade und parallel zur Längsachse L ausgebildet. Am Lochformungsabschnitt 124a können mehrere solcher geraden Schneidkanten 126a angeordnet sein, die symmetrisch, d. h. mit gleichmäßigen Umfangsabständen beabstandet, oder auch unsymmetrisch zueinander angeordnet sein können. Wie auch bei der ersten Ausführungsmöglichkeit ragen die Schneidkanten 126a weder in den zylindrischen Abschnitt 123a hinein noch bis an die abgerundete Schraubenspitze 125 heran. Im Querschnitt können die Schneidkanten 126a wie in Fig. 2 gezeigt und obenstehend erläutert ausgebildet sein. Im Übrigen gelten analog die Ausführungen im Zusammenhang mit der ersten Ausführungsmöglichkeit.

Fig. 5 zeigt eine dritte Ausführungsmöglichkeit einer erfindungsgemäßen loch- und gewindeformenden Schraube. Im Hinblick auf die anderen Ausführungsmöglichkeiten werden für gleiche oder funktionsgleiche Elemente bzw. Komponenten die selben Bezugszeichen jedoch mit dem Zusatz "b" gebraucht. Bis auf die nachfolgend erläuterten Unterschiede kann die Schraube 100b alle Merkmale der anderen Ausführungsmöglichkeiten aufweisen. Die entsprechenden Erläuterungen gelten analog.

Bei der Schraube 100b ist der Schaft 120b ohne einen zylindrischen Abschnitt 123 ausgebildet. Bezüglich der Einschraubrichtung geht der selbstformende Gewindeabschnitt 122b direkt, gegebenenfalls mit einem geeignet ausgebildeten Übergang, in den Lochformungsabschnitt 124b über. In axialer Richtung erstrecken sich die Schneidkanten 126b zwischen dem selbstformenden Gewindeabschnitt 122b und der abgerundeten Schraubenspitze 125b, ohne in den Gewindeabschnitt 122b hinein zu reichen und ohne bis an die Schraubenspitze 125 heran zu reichen. Die Schneidkanten 126b sind wendelförmig ausgebildet, können aber auch gerade ausgebildet sein, wie in Fig. 4 gezeigt und obenstehend erläutert. Im Übrigen gelten analog die Ausführungen im Zusammenhang mit den anderen Ausführungsmöglichkeiten.

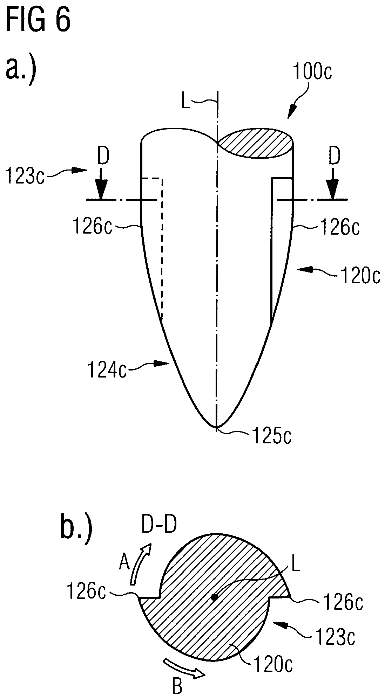

Fig. 6 zeigt eine vierte Ausführungsmöglichkeit einer erfindungsgemäßen loch- und gewindeformenden Schraube, wobei hier nur der untere Bereich des Schafts dargestellt ist. Im Hinblick auf die anderen Ausführungsmöglichkeiten werden für gleiche oder funktionsgleiche Elemente bzw. Komponenten die selben Bezugszeichen jedoch mit dem Zusatz "c" gebraucht. Bis auf die nachfolgend erläuterten Unterschiede kann die Schraube 100c alle Merkmale der anderen Ausführungsmöglichkeiten aufweisen. Die entsprechenden Erläuterungen gelten analog.

Abweichend zu den vorausgehend erläuterten Ausführungsmöglichkeiten sind die geraden oder gegebenenfalls auch wendelförmigen Schneidkanten 126c derart ausgebildet, dass diese in axialer Richtung (L) den Lochformungsabschnitt 124c übersteigen und bis in den zylindrischen Abschnitt 123c hineinreichen. In dem gezeigten Bespiel erstrecken sich die Schneidkanten 126c in axialer Richtung hälftig über den Lochformungsabschnitt 124c und den zylindrischen Abschnitt 123c, wobei auch andere Längenverteilungen (bspw. 1/3 zu 2/3, 1/4 zu 3/4 oder umgekehrt) möglich sind. Der axiale Abstand zu der verrundeten Schraubenspitze 125c ist größer als bei den vorausgehend erläuterten Ausführungsmöglichkeiten. Beim Einschrauben gelangen die Schneidkanten 126c somit erst später in Eingriff mit dem Bauteilmaterial (insbesondere des oberen Bauteils 210). Die Anzahl von zwei Schneidkanten 126c ist lediglich beispielhaft. Auch die symmetrische Ausbildung der Schneidkanten 126c ist lediglich beispielhaft.

Ein weiterer Unterschied zu den vorausgehend erläuterten Ausführungsmöglichkeiten ist die abweichende Orientierung der Schneid-Drehrichtung A und der Fließlochform-Drehrichtung B, was sich anschaulich aus der Schnittdarstellung in Fig. 6b, gemäß dem in Fig. 6a angegebenen Schnittverlauf D-D, ergibt.

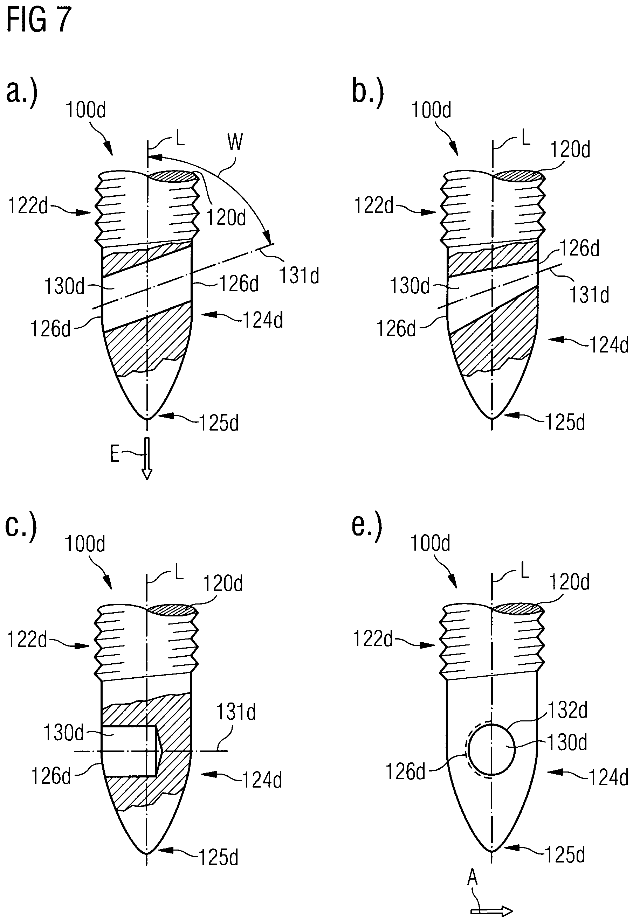

Fig. 7 zeigt verschiedene Ausgestaltungen für eine vierte Ausführungsmöglichkeit einer erfindungsgemäßen loch- und gewindeformenden Schraube, wobei hier nur die unteren bzw. vorderen Bereiche der Schäfte dargestellt sind. Im Hinblick auf die anderen Ausführungsmöglichkeiten werden für gleiche oder funktionsgleiche Elemente bzw. Komponenten die selben Bezugszeichen jedoch mit dem Zusatz "d" gebraucht. Bis auf die nachfolgend erläuterten Unterschiede kann die Schraube 100d alle Merkmale der anderen Ausführungsmöglichkeiten aufweisen. Die entsprechenden Erläuterungen gelten analog.

Die in Fig. 7a gezeigte Schraube 100d ist, wie auch die Schraube 100b gemäß Fig. 5, ohne einen zylindrischen Abschnitt zwischen dem selbstformenden Gewindeabschnitt und dem Lochformungsabschnitt ausgebildet. Der Lochformungsabschnitt 124d schließt somit direkt an den selbstformenden Gewindeabschnitt 122d an. Der Lochformungsabschnitt 124d weist eine als Durchgangsbohrung ausgebildete Querbohrung 130d auf, an der zumindest ein Bohrungsrand und bevorzugt beide Bohrungsränder an den Bohrungsöffnungen zumindest teilweise als Schneidkante bzw. Schneidkanten 126d ausgebildet sind, wie nachfolgend noch näher erläutert.

Die Querbohrung 130d ist als zylindrische Durchgangsbohrung ausgebildet, deren Durchmesser dem 0,3-fachen bis 0,7-fachen des Schaft-Nenndurchmessers (insbesondere des Nenndurchmessers bzw. Außendurchmessers des selbstformenden Gewindeabschnitts 122d) entsprechen kann. Die Bohrungsachse 131d ist gegenüber der Längsachse L in einem Winkel W (Schrägstellungswinkel) geneigt. Der Winkel W kann einen Wert zwischen 10° und 90° einnehmen. Bei einem Winkel W von 90° erstreckt sich die Querbohrung 130d senkrecht zur Längsachse L. Die Querbohrung 130d kann in vorteilhafter Weise der Aufnahme und gegebenenfalls auch dem Abtransport von Zerspanungsprodukten dienen, wobei die von der oder den Schneidkanten 126d erzeugten Zerspanungsprodukte entgegen der Einschraubrichtung E durch die Durchgangsbohrung 130d hindurch wegbefördert werden und dann z. B. abgesaugt werden können.

Besonders bevorzugt ist vorgesehen, dass die Querbohrung 130d derart schräg ausgeführt ist, dass sich der untere Bohrungsrand der oberen bzw. hinteren Bohrungsöffnung (dies ist gemäß Darstellung die rechtsseitige Bohrungsöffnung) in etwa auf der selben axialen Position wie der obere Bohrungsrand der unteren bzw. vorderen Bohrungsöffnung (dies ist gemäß Darstellung die linksseitige Bohrungsöffnung) befindet und beide Bohrungsöffnungen mit einer Schneidkante 126d ausgebildet sind, wodurch sich in der Summe in axialer Richtung eine verhältnismäßig lange Schneidkante 126d ergibt.

Die in Fig. 7b gezeigte Schraube 100d ist im Wesentlichen identisch wie die in Fig. 7a gezeigte Schraube, wobei die Querbohrung 130d als konische bzw. kegelförmige Querbohrung ausgebildet ist. Das Durchmesserverhältnis der Bohrungsöffnungen kann im Bereich von 10:1 bis 3:1 (Durchmesserverhältnis der größeren Bohrungsöffnung zur kleineren Bohrungsöffnung) liegen. Im Übrigen gelten die vorausgehenden Erläuterungen. Die Querbohrung 130d kann auch anders ausgestaltet sein und bspw. aus zwei konischen Bohrungsabschnitten oder aus einem konischen und einem zylindrischen Bohrungsabschnitt bestehen, die in etwa auf der Längsachse L zusammentreffen.

Die in der Fig. 7a und Fig. 7b gezeigten Schrauben 100d können auch einen zylindrischen Abschnitt oder einen sonstigen axialen Abschnitt (siehe z. B. Bezugszeichen 129 in Fig. 8) aufweisen, der zwischen dem selbstformenden Gewindeabschnitt 122d und dem Lochformungsabschnitt 124d angeordnet ist. Die Querbohrung 130d kann dann im Lochformungsabschnitt 124d oder in dem angrenzenden axialen Abschnitt angeordnet sein. Ferner ist denkbar, dass sich die Querbohrung 130d mit schräg verlaufender Bohrungsachse 131d zwischen dem Lochformungsabschnitt 124d und dem angrenzenden axialen Abschnitt erstreckt.

Die in Fig.7c gezeigte Schraube 100d ist im Wesentlichen identisch wie die in Fig. 7a gezeigte Schraube, wobei die Querbohrung 130d als zylindrische Sacklochbohrung ausgebildet ist, die sich im Wesentlichen senkrecht bzw. orthogonal zur Längsachse L erstreckt. Die Sacklochbohrung 130d kann auch mit schräger Bohrungsachse 131 d und/oder konisch ausgeführt sein. Im Übrigen gelten die vorausgehenden Erläuterungen.

Fig. 7d zeigt in einer anderen Seitenansicht den Bohrungsrand 132d einer Bohrungsöffnung der Querbohrung 130d, bspw. der in Fig. 7c gezeigten Schraube. Der gesamte Bohrungsrand 132d kann als Schneidkante 126d ausgebildet sein. Bevorzugt ist jedoch vorgesehen, dass der Bohrungsrand 132d nur teilweise und insbesondere in etwa nur hälftig (d. h. über einen Bogenabschnitt von 180°) als Schneidkante 126d ausgebildet ist. Bezüglich der angegebenen Schneid-Drehrichtung A ist bevorzugt nur die linksseitige Hälfte des Bohrungsrands 132d als Schneidkante 126d ausgebildet, was mit gestrichelter Linie veranschaulicht ist.

Mit der in Fig. 7 gezeigten Schraube 100d sind sehr gute Direktverschraubungsergebnisse, insbesondere im Mischbau, erzielbar, wobei insbesondere die sehr gute Zerspanungswirkung hervorzuheben ist, was vor allem beim Fügen von faserverstärkten Kunststoffen (FVK) und insbesondere kohlenstofffaserverstärkten Kunststoffen (CFK) vorteilig ist. Die in Fig. 7 gezeigten und vorausgehend erläuterten Merkmale können auch zu weiteren Ausgestaltungen kombiniert werden. Ferner ist denkbar, dass eine Schraube 100d mehrere solcher Querbohrungen 130d aufweist, die sich gegebenenfalls auch überschneiden können.

Fig. 8 zeigt weitere Ausgestaltungsmöglichkeiten einer erfindungsgemäßen loch- und gewindeformenden Schraube, wobei nur die unteren Bereiche der Schäfte 120 dargestellt sind. Den gemäß obenstehender Definition konisch ausgebildeten Lochformungsabschnitten 124 schließt sich in Richtung der selbstformenden Gewindeabschnitte (nicht dargestellt) jeweils ein axialer Abschnitt 129 an. Die gezeigten axialen Abschnitte 129 erstrecken sich somit zwischen den selbstformenden Gewindeabschnitten und den Lochformungsabschnitten 124. Die axialen Abschnitte 129 sind nicht zylindrisch, sondern konisch (bzw. kegelförmig) und insbesondere konvex oder konkav (bezogen auf die gezeigten Seitenansichten) ausgebildet. Die axialen Abschnitte 129 unterscheiden sich in ihrer geometrischen Ausgestaltung und/oder in ihrer axialen Länge. Die Schneidkanten sind nicht dargestellt. Die Schneidkanten können gemäß den vorausgehenden Figuren und Erläuterungen am Lochformungsabschnitt 124 und/oder an den axialen Abschnitten 129 angeordnet sein. Insbesondere können auch Querbohrungen, wie in Fig. 7 gezeigt, vorgesehen sein. Die Schneidkanten können auch an einem schulterartigen Übergangsabschnitt zwischen den axialen Abschnitten 124 und 129 ausgebildet sein. Ferner ist denkbar, dass der Lochformungsabschnitt 124 nicht konisch, sondern bspw. zylindrisch ausgebildet ist und eine spitze, abgerundete oder abgeflachte Schraubenspitze aufweist.

Fig. 8a zeigt eine Ausgestaltungsmöglichkeit, die unter den Wortlaut des Anspruchs 1 nicht fällt, mit einer spitz ausgebildeten Schraubspitze 125'. Fig. 8e zeigt eine Ausführungsmöglichkeit, bei der die Schraubenspitze nicht verrundet, sondern abgeflacht mit einer stirnseitigen Fläche 125" ausgebildet ist. Ebenso kann die Schraubenspitze auch mit einer kreisringförmigen stirnseitigen Fläche ausgebildet sein.

Fig. 9 zeigt mögliche Querschnittsformen von Schäften und insbesondere der in Fig. 8 gezeigten Schäfte. Fig. 9a zeigt einen Kreisquerschnitt, Fig. 9b und Fig. 9c zeigen trilobulare Querschnitte, Fig. 9d zeigt einen polygonen Querschnitt (beispielhaft 7-eckig) und Fig. 9e zeigt einen elliptischen Querschnitt. Der Schaft 120 einer erfindungsgemäßen loch- und gewindeformenden Schraube 100 kann entlang seiner axialen Längserstreckung mit unterschiedlichen Querschnittformen ausgebildet sein.

Mit einer erfindungsgemäßen loch- und gewindeformenden Schraube können auch mehr als zwei Bauteile gefügt werden. Ferner ist die Erfindung nicht auf die beschriebenen Ausführungs- und Ausgestaltungsmöglichkeiten, Bauteilmaterialien bzw. -werkstoffe und Materialkombinationen beschränkt.

## Patentansprüche

1. Loch- und gewindeformende Schraube (100) zum Direktverschrauben von Bauteilen (210, 220), mit einem Kopf (110) und einem am Kopf (110) angeformten Schaft (120), wobei der Schaft (120) einen selbstformenden Gewindeabschnitt (122), einen davor angeordneten Lochformungsabschnitt (124) zum Fließlochformen und eine abgerundete oder abgeflachte Schraubenspitze (125) aufweist,
**dadurch gekennzeichnet, dass**
der Schaft (120) wenigstens eine Schneidkante (126) mit Zerspanungsfunktion aufweist, die im Wesentlichen vor dem selbstformenden Gewindeabschnitt (122) am Lochformungsabschnitt (124) angeordnet ist und die sich nicht bis zur Schraubenspitze (125) erstreckt, sodass die Schraubenspitze (125) schneidkantenfrei ist, wobei diese Schneidkante (125) ferner derart ausgebildet ist, dass diese beim Drehen der Schraube (100) in eine Drehrichtung (A) das Schneiden eines Durchgangslochs ermöglicht und beim Drehen der Schraube (100) in die entgegengesetzte Drehrichtung (B) das Fließlochformen zulässt, wodurch die Schneidkante (126) einerseits das Einbringen eines Durchgangslochs in wenigstens eines der Bauteile (210) ermöglicht, ohne andererseits das Fließlochformen in einem anderen Bauteil (220) zu beeinträchtigen.

2. Loch- und gewindeformende Schraube (100) nach Anspruch 1,
**dadurch gekennzeichnet, dass**
die Schneidkante (126) an einer radial nach außen weisenden Schulter (127) ausgebildet ist.

3. Loch- und gewindeformende Schraube (100) nach Anspruch 1,
**dadurch gekennzeichnet, dass**
die Schneidkante (126) an einer radial nach innen weisenden Nut (128) ausgebildet ist.

4. Loch- und gewindeformende Schraube (100) nach Anspruch 2 oder 3,
**dadurch gekennzeichnet, dass**
die Schneidkante (126) wendelförmig ausgebildet ist.

5. Loch- und gewindeformende Schraube (100) nach Anspruch 4,
**dadurch gekennzeichnet, dass**
die wendelförmige Schneidkante (126) und der selbstformende Gewindeabschnitt (122) eine entgegengesetzte Orientierung aufweisen.

6. Loch- und gewindeformende Schraube (100) nach Anspruch 4 oder 5,
**dadurch gekennzeichnet, dass**
sich die wendelförmige Schneidkante (126) in Umfangsrichtung über einen Halbkreis erstreckt.

7. Loch- und gewindeformende Schraube (100) nach Anspruch 1,
**dadurch gekennzeichnet, dass**
die Schneidkante (126) an der Bohrungsöffnung (132) einer Querbohrung (130) im Schaft (120) ausgebildet ist.

8. Bauteilverbund (200), umfassend ein erstes Bauteil (210) und ein zweites Bauteil (220), die durch wenigstens eine loch- und gewindeformende Schraube (100) gemäß einem der vorausgehenden Ansprüche miteinander gefügt sind.

## Claims

1. A hole-forming and thread-forming screw (100) for directly screwing components (210, 220) together, comprising a head (110) and a shank (120) integrally formed on the head (110), the shank (120) comprising a self-tapping thread section (122), a hole-forming section (124) provided in front of the thread section for flow drilling, and a rounded or flattened screw tip (125),
**characterized in that**
the shank (120) comprises at least one cutting edge (126) having a material removal function, which is disposed substantially in front of the self-tapping thread section (122) on the hole-forming section (124) and does not extend to the screw tip (125), so that the screw tip (125) is free of a cutting edge, this cutting edge (125) furthermore being constructed so as to enable the cutting of a through hole during a rotation of the screw (100) in a direction of rotation (A) and to allow flow drilling during a rotation of the screw (100) in the opposite direction of rotation (B), whereby the cutting edge (126) permits on the one hand the introduction of a through hole in at least one of the components (210), without, on the other hand, impairing the flow drilling in another component (220).

2. The hole-forming and thread-forming screw (100) according to claim 1,
**characterized in that**
the cutting edge (126) is formed on a radially outwardly directed shoulder (127).

3. The hole-forming and thread-forming screw (100) according to claim 1,
**characterized in that**
the cutting edge (126) is formed on a radially inwardly directed groove (128).

4. The hole-forming and thread-forming screw (100) according to claim 2 or 3,
**characterized in that**
the cutting edge (126) has a helical design.

5. The hole-forming and thread-forming screw (100) according to claim 4,
**characterized in that**
the orientation of the helical cutting edge (126) is opposite that of the self-tapping thread section (122).

6. The hole-forming and thread-forming screw (100) according to claim 4 or 5,
**characterized in that**
the helical cutting edge (126) extends across a semicircle in the circumferential direction.

7. The hole-forming and thread-forming screw (100) according to claim 1,
**characterized in that**
the cutting edge (126) is formed on the borehole opening (132) of a transverse borehole (130) in the shank (120).

8. A component combination (200), comprising a first component (210) and a second component (220), which are joined to one another by at least one hole-forming and thread-forming screw (100) according to one of the preceding claims.

## Revendications

1. Vis (100) formant un trou et un taraudage pour le vissage direct de pièces (210, 220), avec une tête (110) et une tige (120) formée sur la tête (110), dans laquelle la tige (120) présente une section de taraudage autotaraudeuse (122), une section de formation de trou (124) agencée devant pour la formation de trou par fluage et une pointe de vis (125) arrondie ou aplatie,
**caractérisée en ce que**
la tige (120) présente au moins une arête de coupe (126) avec fonction d'enlèvement de copeaux, qui est agencée sensiblement devant la section de taraudage autotaraudeuse (122) au niveau de la section de formation de trou (124) et qui ne s'étend pas jusqu'à la pointe de vis (125), si bien que la pointe de vis (125) est dépourvue d'arête de coupe, dans laquelle cette arête de coupe (125) est réalisée en outre de telle manière que celle-ci permet lors de la rotation de la vis (100) dans un sens de rotation (A) la coupe d'un trou traversant et lors de la rotation de la vis (100) dans le sens de rotation opposé (B) permet la formation de trou par fluage, moyennant quoi l'arête de coupe (126) permet d'une part l'introduction d'un trou traversant dans au moins une des pièces (210), sans entraver d'autre part la formation de trou par fluage dans une autre pièce (220).

2. Vis (100) formant un trou et un taraudage selon la revendication 1,
**caractérisée en ce que**
l'arête de coupe (126) est réalisée au niveau d'un épaulement (127) dirigé radialement vers l'extérieur.

3. Vis (100) formant un trou et un taraudage selon la revendication 1,
**caractérisée en ce que**
l'arête de coupe (126) est réalisée au niveau d'une rainure (128) dirigée radialement vers l'intérieur.

4. Vis (100) formant un trou et un taraudage selon la revendication 2 ou 3,
**caractérisée en ce que**
l'arête de coupe (126) est réalisée en forme d'hélice.

5. Vis (100) formant un trou et un taraudage selon la revendication 4,
**caractérisée en ce que**
l'arête de coupe hélicoïdale (126) et la section de taraudage autotaraudeuse (122) présentent une orientation opposée.

6. Vis (100) formant un trou et un taraudage selon la revendication 4 ou 5,
**caractérisée en ce que**
l'arête de coupe hélicoïdale (126) s'étend dans le sens périphérique sur un demi-cercle.

7. Vis (100) formant un trou et un taraudage selon la revendication 1,
**caractérisée en ce que**
l'arête de coupe (126) est réalisée au niveau de l'ouverture de perçage (132) d'un perçage transversal (130) dans la tige (120).

8. Assemblage de pièces (200), comprenant une première pièce (210) et une deuxième pièce (220), qui sont assemblées l'une à l'autre par au moins une vis (100) formant un trou et un taraudage selon l'une quelconque des revendications précédentes.
